# EUROPEAN PATENT SPECIFICATION

(11) **EP 3 078 715 B1**
(45) Date of publication and mention of the grant of the patent: **06.06.2018**
(21) Application number: 16164691.4
(22) Date of filing: 11.04.2016
(51) Int. Cl.: C09D 5/16

(54) **ANTIFOULING COMPOSITION**
FÄULNISVERHINDERNDE ZUSAMMENSETZUNG
COMPOSITION ANTISALISSURE

(30) Priority: 09.04.2015 EP 15163012
(43) Date of publication of application: 12.10.2016
(73) Proprietor: Jotun A/S, 3202 Sandefjord (NO)
(72) Inventor: ESMURZIEV, Aslan, 3202 Sandefjord (NO); HELBERG, Ragne, 3202 Sandefjord (NO)
(74) Representative: Campbell, Neil Boyd

(56) References cited:
- EP-A1- 1 918 190
- EP-A1- 1 921 119
- EP-A1- 2 128 208
- EP-A1- 2 161 316
- EP-A1- 2 586 840
- EP-A1- 2 725 073
- WO-A1-2014/064048
- US-A1- 2011 172 325

## Description

### Field of the Invention

The present invention relates to marine antifouling coating compositions, more specifically to marine antifouling coating compositions comprising a silyl ester copolymer, a rosin, tralopyril and a particular class of stabiliser. The invention further relates to a method of protecting objects from fouling, and objects coated with the antifouling composition of the invention.

### Background of invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economic consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

Antifouling coatings commonly contain copper biocides such as metallic copper, cuprous oxide and copper thiocyanate. For instance, EP 2 204 423 A1 discloses the combination of a hydrolysable silane copolymer, copper and/or an inorganic copper compound and zinc oxide as a marine antifouling coating.

EP 0 802 243 discloses antifouling coatings based on silyl ester copolymers and rosins comprising an antifouling agent. Antifoulants suggested include zinc and especially copper salts, and organocopper compounds.

EP 2 128 208 discloses antifouling coatings based on silyl ester copolymers and typically comprising rosins or rosin salts. Both inorganic and organic biocides are disclosed, with preferred biocides being zinc pyrithione, copper pyrithione, pyridine-triphenylborane, 4-isopropylpyridyl-diphenylmethyl borane, bethoxazine, zineb, Sea-Nine 211 (4,5-dichloro-2-n-octyl-3-isothiazolone) and Irgarol 1051 (2-methylthio-4-t-butylamino-6-cyclopropylamino-s-triazine).

Although copper biocides are widely used, organic biocides tend to have greater efficacy as antifoulants and their use may allow a reduction in the loading of inorganic biocides. A reduction in inorganic biocides may lead to a reduction in paint discolouration due to precipitation of copper salts. A lower copper salt content may therefore allow formulation of paints with different bright colours as the issues of discolouration are minimised. It is therefore an object of the invention to avoid discoloration and hence enable the use of paints with bright colours.

In particular, it is perceived that the use of anti-fouling paints which contain low levels of copper biocides might be useful during the vessel outfitting period.

The present inventors now propose using tralopyril as an anti-foulant instead of the cuprous oxide most commonly used in anti-fouling coating compositions.

The use of the organic biocide tralopyril (Econea®) as a marine anti-fouling agent is however known. For instance, WO2007/088172 discloses that the combination of tralopyril and a zinc or copper salt produces a synergistic effect against marine fouling organisms.

KR20140011119A discloses copper-free antifouling agents comprising a hydrolysable binder based on metal acrylates, in addition to copper-free antifouling agents including tralopyril.

EP 1 457 531 A1 discloses the combination of a metal-containing copolymer, tralopyril and a metal pyrithione compound. WO2007/103013 discloses combinations of tralopyril with non-copper pyrithiones. Formulating those biocides with a silyl acrylate polymer is one option suggested.

WO2014/096102 discloses in its examples compositions comprising tralopyril, a silyl copolymer, tetraethoxysilane and a carbodiimide but in the absence of rosin.

WO2012/150360 A2 discloses acrylic binders comprising a copper biocide and a co-biocide. Exemplified binders are Primal™ AC-261-K from Dow Chemicals which is an acrylic binder. Both copper and non-copper (including organic) biocides are envisaged. Tralopyril is suggested amongst a long list of possible organic biocides.

The use of organic biocides such as tralopyril in place of copper biocides however presents a new problem in that biocides often contain reactive functional groups which may assist unwanted crosslinking of polymer chains within the paint. This may lead to thickening or gelling of the paint during storage.

The most successful self-polishing antifouling systems on the market today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

Silyl ester functional (meth)acrylic copolymers are often used together with other binders such as acrylates and rosin/rosin derivatives to adjust the self-polishing properties and the mechanical properties of antifouling coating films. It is known that silyl ester copolymers, rosin and copper oxide together form a stable blend. Silyl ester copolymers can also be mixed with tralopyril but in the additional presence of rosin, the blend of silyl ester copolymer, rosin and tralopyril becomes unstable.

We have surprisingly found that antifouling compositions comprising a silyl copolymer, rosin and tralopyril have greatly improved storage stability when formulated with a carbodiimide and/or an alkoxysilane stabilizer. The degree of paint thickening is significantly reduced compared to when inorganic dehydrating agents such as CaSO₄ or molecular sieves are used.
The object of the present invention is therefore to provide an antifouling coating composition comprising a silyl ester copolymer, a rosin and tralopyril, which exhibits improved storage stability over those known in the art whilst also being an effective antifouling coating composition. It is also an object of the invention to avoid discoloration of the paint applied and hence enable the use of paints with bright colours.

These objectives are attained through the use of carbodiimides and/or certain silanes as stabilisers in an antifouling coating composition.

### Summary of invention

Thus, viewed from a first aspect the invention provides a marine antifouling coating composition comprising:
(A) a binder comprising a silyl ester copolymer and a rosin or derivative thereof;
(B) tralopyril or a salt thereof; and
(C) a stabilizer selected from at least one of a carbodiimide or a silane formula (I):

   SiRₙ(OR)₄₋ₙ (I)

   in which n = 0, 1, 2 or 3, and each R is independently a C1-20 hydrocarbyl group in which each R is optionally interrupted by an O group; wherein the marine antifouling coating composition contains less than 0.2 wt% (dry solids) cuprous oxide.
Ideally, the rosin is present in an amount of at least 1 wt% (dry solids) of the antifouling coating composition. Preferably, the antifouling coating composition contains less than 0.1 wt% cuprous oxide, ideally no cuprous oxide.

Viewed from another aspect the invention provides a process for the manufacture of the anti-fouling coating composition as herein before defined comprising blending:
(A) a binder comprising a silyl ester copolymer and a rosin or derivative thereof;
(B) tralopyril or a salt thereof; and
(C) a stabilizer selected from at least one of a carbodiimide or a silane of formula (I)

   SiRₙ(OR)₄₋ₙ (I)

   in which n = 0, 1, 2 or 3, and each R is independently a C1-20 hydrocarbyl group in which each R is optionally interrupted by an O group.

In a further aspect the invention provides a process for protecting an object from fouling, comprising coating at least a part of said object which is subject to fouling with an anti-fouling coating composition as hereinbefore defined.

In a further aspect the invention provides an object coated with the antifouling coating composition as hereinbefore defined. The object is preferably a marine object such as the hull of a ship or other substrate exposed repeatedly to sea water.

Viewed form another aspect the invention provides the use of an antifouling coating composition as hereinbefore defined to prevent fouling of a marine surface.

Viewed from a another aspect the invention provides a marine antifouling coating composition comprising:
(i) 0.5 to 45 wt% of a silyl ester copolymer
(ii) 0.5 to 45 wt% of a rosin or derivative thereof;
(iii) 0.5 to 10 wt% of tralopyril or a salt thereof; and
(iv) 0.05 to 5.0 wt% a stabilizer selected from at least one of a carbodiimide or a silane formula (I):

   SiRₙ(OR)₄₋ₙ (I)

   in which n = 0, 1, 2 or 3, and each R is independently a C1-20 hydrocarbyl group in which each R is optionally interrupted by an O group.

### Definitions

The term hydrocarbyl group refers to any group containing C atoms and H atoms only and therefore covers alkyl, alkenyl, aryl, cycloalkyl, arylalkyl groups and so on.

The term rosin used in the text which follows is being used to cover "rosin or derivatives thereof".

### Detailed description of invention

The antifouling coating composition of the invention comprises a binder (A) comprising a silyl ester copolymer and a rosin, tralopyril (B), and a stabilizer (C) selected from a carbodiimide and/or a silane as hereinbefore defined, wherein the marine antifouling coating composition contains less than 0.2 wt% (dry solids) cuprous oxide. The antifouling compositions preferably contain at least 1 wt% (dry solids) of a rosin. The anti-fouling compositions are substantially free of cuprous oxide(s), i.e. they comprise less than 0.2 wt% (dry solids) of cuprous oxide(s) (Cu₂O).

### Binder - component (A)

The binder of the present invention includes at least a silyl ester copolymer and a rosin.

### Silyl ester copolymer

The use of silyl ester copolymers in antifouling coating compositions is well known and, in its broadest embodiment, the invention covers any of these well-known hydrolysable binders. Such silyl ester copolymers are well known commercial products.

In a preferred embodiment, the silyl ester copolymer of the invention comprises the residue of at least one monomer (A) of formula (II) 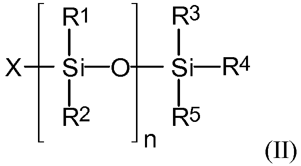 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, optionally substituted C₆₋₂₀ aryl groups and -OSi(R⁶)₃ groups;
each R⁶ is independently a linear or branched C₁₋₄ alkyl groups,
n is an integer from 0 to 5;
X is an ethylenically unsaturated group, such as acryloyloxy group, methacryloyloxy group, (methacryloyloxy)alkylcarboxy group, (acryloyloxy)alkylcarboxy group, maleinoyloxy group, fumaroyloxy group, itaconoyloxy group and citraconoyloxy group.

The term "alkyl" is intended to cover both linear or branched alkyl groups such as methyl, ethyl, propyl, and butyl. Particularly preferred cycloalkyl groups include cyclohexyl and substituted cyclohexyl.

Examples of the substituted aryl groups include aryl groups substituted with at least one substituent selected from halogens, alkyl groups having 1 to 8 carbon atoms, acyl groups, or a nitro group. Particularly preferred aryl groups include substituted and unsubstituted phenyl, benzyl, phenalkyl or naphthyl.

In a further preferred embodiment, the silyl ester copolymer of the present invention comprises one or more monomers (A) having silyl ester functionality as defined by the general formula (II) in the amount of 1-99 % by mole of the total mixture of monomers, more preferably 15-60 % by mole, most preferably 20-40% by mole.

Ideally, preferred silyl ester monomers are based on compounds of formula (II) in which n is 0, i.e. those of formula X-SiR³R⁴R⁵.

Examples of monomers containing silyl ester functionality are well known and are described in, *inter alia,* WO2014/064048. Monomers as defined by the general formula (II) include:
silyl ester monomers of acrylic acid and methacrylic acid, such as triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-tert-butylsilyl (meth)acrylate, tri-sec-butylsilyl (meth)acrylate, tri-n-pentylsilyl (meth)acrylate, triisopentylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-(p-methylphenyl)silyl (meth)acrylate, tribenzylsilyl (meth)acrylate, ethyldimethylsilyl (meth)acrylate, n-propyldimethylsilyl (meth)acrylate, isopropyldimethylsilyl (meth)acrylate, n-butyldimethylsilyl (meth)acrylate, isobutyldimethylsilyl (meth)acrylate, tert-butyldimethylsilyl (meth)acrylate, n-pentyldimethylsilyl (meth)acrylate, n-hexyldimethylsilyl (meth)acrylate, neohexyldimethylsilyl (meth)acrylate, n-octyldimethylsilyl (meth)acrylate, n-decyldimethylsilyl (meth)acrylate, dodecyldimethylsilyl (meth)acrylate, n-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, p-tolyldimethylsilyl (meth)acrylate, isopropyldiethylsilyl (meth)acrylate, n-butyldiisopropylsilyl (meth)acrylate, n-octyldiisopropylsilyl (meth)acrylate, methyldi-n-butylsilyl (meth)acrylate, methyldicyclohexylsilyl (meth)acrylate, methyldiphenylsilyl (meth)acrylate, tert-butyldiphenylsilyl (meth)acrylate, nonamethyltetrasiloxy_(meth)acrylate, bis(trimethylsiloxy)methylsilyl (meth)acrylate, tris(trimethylsiloxy)silyl (meth)acrylate_and others as described in WO2014/064048 and WO03/080747.

The polymerizable monomers other than monomers A are monomers copolymerizable with monomers A. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, methyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert*-butylamino)ethyl (meth)acrylate and lactone modified hydroxyalkyl (meth)acrylates such as caprolactone acrylate and others as described in WO2014/064048.

In producing the polymer containing organosilyl ester groups, the proportion of at least one of monomers A represented by formula (II) to at least one polymerizable monomer other than monomers A can be suitably determined according to the use of the coating composition. In general, however, the proportion of at least one of monomers A is preferably from 1 to 99% by mole and that of at least one other monomer is preferably from 99 to 1% by mole, preferably 15-60 % by mole, more preferably 20-40 % by mole of the total mixture of comonomers

The polymer containing organosilyl ester groups can be obtained by polymerizing such a monomer mixture in the presence of a polymerization catalyst by any of various methods such as solution polymerization, bulk polymerization, emulsion polymerization, and suspension polymerization in an ordinary way, as described in WO2014/064048.

The thus-obtained polymer containing organosilyl ester groups desirably has a weight-average molecular weight of from 1,000 to 100,000, preferably 10,000 - 50,000. The solution of the polymer desirably has a viscosity of 50 P or lower, preferably 20 P or lower at 23°C (according to ASTM D2196-10 using a Brookfield DV-1 viscometer with LV-2 or LV-4 spindle at 12 rpm). The polymer solution is desirably regulated so as to have a solid content of from 5 to 90% by weight, preferably from 15 to 85% by weight, more preferably from 40 to 75% by weight.

A particularly suitable and preferred silane copolymer is triisopropylsilyl (meth)acrylate polymer.

The final antifouling coating composition of the invention preferably comprises 0.5 to 45 wt% (dry solids) of the silyl ester copolymer, such as 1.0 to 30 wt%, in particular 5 to 10 wt% based on the total coating composition. Alternatively viewed, the silyl ester copolymer may form 5 to 95 % vol. solids of the total binder composition.

### Rosin component

Rosin can be used to adjust the self-polishing properties and the mechanical properties of the antifouling coating film. Antifouling coatings of the invention preferably comprise at least 0.5 wt% (dry solids) rosin, such as at least 1 wt%. The rosin of use in the invention can be a rosin or derivative thereof such as a salt thereof e.g. as described below. Examples of rosin materials include wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters, glycerol esters, methyl esters, pentaerythritol esters and other esters of rosin and hydrogenated rosin, copper resinate, zinc resinate, calcium resinate, magnesium resinate and other metal resinates of rosin and polymerised rosin and others as described in WO 97/44401.

In the present invention, the antifouling composition as a whole preferably comprises 0.5 to 45 wt%, preferably 1 to 45 wt% (dry solids) of a rosin material, preferably 1 to 20 wt%, such as 10 to 15 wt%.

The properties of the binder can be tuned by varying the relative amounts of silyl ester copolymer and rosin components. The ratio (volume solids) of silyl ester copolymer(s): rosin(s) is 95:5 to 5:95, preferably 80:20 to 20:80, most preferably 70:30 to 30:70.

### Other Binder components

In addition to a rosin and the silyl ester copolymer, an additional binder can be used to adjust the properties of the antifouling coating film. Examples of binders that can be used in addition to the silyl esters and rosins of the invention include:
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(*N*-vinyl pyrrolidone) copolymers and other copolymers as described in EP 0 526 441;
(meth)acrylic polymers and copolymers, in particular acrylate binders, such as poly(*n*-butyl acrylate), poly(*n*-butyl acrylate-co-isobutyl vinyl ether) and others as described in WO03/070832 and EP2128208;
vinyl ether polymers and copolymers, such as poly(methyl vinyl ether), poly(ethyl vinyl ether), poly(isobutyl vinyl ether), poly(vinyl chloride-co-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625, provided that the metal is not copper;
alkylated resins and modified alkylated resins; and
other condensation polymers as described in WO 96/14362. It is also possible to use polyoxalates as described in WO2009/100908.

If, in addition to the rosin and silyl ester copolymer, a further binder is present, the weight ratio of silyl copolymer(s) : binder may range from 30:70 to 80:20, preferably from 40:60 to 70:30, especially 50:50 to 70:30. These preferred ratios relate to the amount of silane copolymer(s) and additional binder only, i.e. the rosin is not included.

Especially suitable additional binders are (meth)acrylic polymers and copolymers.

### Biocide - component (B)

The anti-fouling coating contains tralopyril or a salt thereof, a compound capable of preventing or removing marine fouling from a surface. Traditionally an antifouling coating composition contains copper biocides such as metallic copper, cuprous oxide, copper thiocyanate and the like. In a preferred embodiment, the anti-fouling agent of the present case is free of cuprous oxide. In a further preferred embodiment, the anti-fouling coating is free of any anti-fouling copper compounds.

The present invention requires the use of an organic biocide tralopyril (sold by Janssen as Econea®) in marine antifouling compositions. Tralopyril is 4-bromo-2-(4-chlorophenyl)-5-(trifluoromethyl)-1H-pyrrole-3-carbonitrile and has the structure shown below:

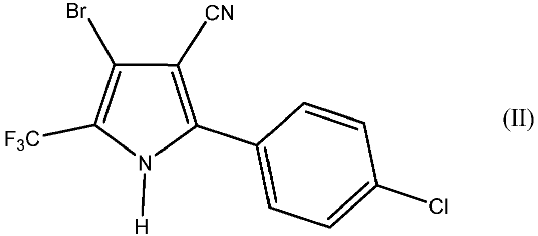

Tralopyril exhibits a broad spectrum of activity against various marine organisms including barnacles, mussels and tube worms. Salts thereof may also be used. The term tralopyril is used below to discuss this biocide. The teaching equally applies to salts thereof.

Antifouling coating compositions of the invention comprise tralopyril in an amount to ensure biocidal activity. Preferred amounts are 0.5 to 10 wt% (dry solids), preferably 1 to 7 wt%, preferably 2 to 6 wt%.

One advantage of the use of organic biocides such as tralopyril is that they exhibit greater biocidal efficacy towards marine organisms compared to metal biocides, meaning that the amount of metal biocide can be reduced or eliminated. In turn, unwanted effects such as discoloration due of the precipitation of copper salts is avoided or reduced.

It is a thus a preferred embodiment of the present invention that the antifouling coating composition is substantially free of copper oxide CuO. According to the invention, the antifouling coating composition is substantially free of Cu₂O. It is also preferred that antifouling coating composition is substantially free of other copper salts which have activity as biocides, such as copper (I) or (II) hydroxides, sulfates, pyrithiones, thiocyanates, carbonates or nitrates, and hydrates thereof. Examples of copper biocides which are preferably absent in the invention are disclosed WO2007/088172.

By substantially free of copper (I) or (II) oxide, it is meant that the antifouling coating composition has a solids content of less than 0.2 wt% of copper (I) or (II) oxide(s), preferably less than 0.1 wt%, especially less than 0.05 wt%, even more preferably less than 0.01 wt%. It is also preferred that the antifouling coating composition has a solids content of less than 0.2 wt% of other copper biocides. Ideally, the coating is free of any of these materials.

The coating compositions of the invention may however contain other biocides such as described in WO2014/064048 Preferred biologically active agents are copper thiocyanate, zinc pyrithione, copper pyrithione, zinc ethylenebis(dithiocarbamate) [zineb], 2-(tert-butylamino)-4- (cyclopropylamino)-6-(methylthio)-1,3,5-triazine [cubutryne], 4,5-dichloro-2-n-octyl-4- isothiazolin-3 -one [DCOIT], N-dichlorofluoromethylthio-N',N'-dimethyl-N-phenylsulfamide [dichlorofluanid], N- dichlorofluoromethylthio-N',N'-dimethyl-N-p-tolylsulfamide [tolylfluanid], 4-[1-(2,3-dimethylphenyl (ethyl]- 1 H -imidazole [medetomidine], triphenylborane pyridine (TPBP). Preferably, the coating composition is free of copper based biocides such as copper thiocyanate and copper pyrithione as well. It is an aspect of the invention that the amount of inorganic biocide is substantially reduced compared to coating compositions known in the art.

The greater efficacy of organic biocides may allow a lower loading of inorganic biocides. In turn, this allows greater flexibility in making paint formulations of different bright colours. Paint discolouration due to precipitation of copper salts is prevented when using organic biocides. The described antifouling composition may therefore be advantageous for use during the vessel outfitting period.

### Stabilizer - component (C)

The stabilizer of the present invention includes one or more of a silane of formula (I) and a carbodiimide. These are explained in more detail in the sections below.

We have established that through the appropriate choice of stabilizer, it is possible to formulate antifouling compositions comprising a silyl ester copolymer, a rosin, and tralopyril, e.g. in the absence of copper biocides, which show a slower increase in viscosity than equivalent formulations containing stabilizers commonly used in the field.

It is preferred that compositions of the invention after 4 weeks storage at 52 °C exhibit less than a 60% increase in viscosity, when measured using a Cone and Plate viscometer set at a temperature of 23 °C (ISO2884-1:2006), preferably less than a 50% increase, most preferably less than a 30% increase in viscosity.

### Silane

One or more silanes of formula (I) may be present as a stabilizer:

SiRₙ(OR)₄₋ₙ (I)

in which n = 0, 1, 2 or 3, and each R is independently a C1-20 hydrocarbyl group such as a C1-20 alkyl, C6-20 aryl or C7-20 arylalkyl group, preferably a C1-20 alkyl group in which each R is optionally interrupted by an O group. Ideally the R groups are not interrupted by an O group.

It is preferred if the silane has a relatively low Mw such as less than 400 g/mol.

Preferably, each R is independently a C1-C10 linear or C3-10-branched alkyl group or C6-10-aryl group or C7-12arylalkyl group, most preferably a linear C1-10 alkyl group or a phenyl group, or C7-12 alkyl substituted phenyl.

The term arylalkyl is used to define a group that can bind via the alkyl or aryl part of the group, e.g. a tolyl or benzyl group.

Most preferably each R is independently a C1-6 alkyl group, such as Me, Et, n-Pr, iPr or n-Bu. Preferably n is 0, 1 or 2, most preferably 0, i.e. the silane is a di-, tri- or tetra-oxy silane, such as tetramethoxysilane and tetraethoxysilane. Most preferably the silane is a tetra-alkoxy silane where n is 4. In one embodiment both a silane and a carbodiimide are present as stabilising agents.

A preferred silane is therefore of formula (X)

Si(OR)₄; (X)

wherein each R is independently a C1-10 alkyl group or a C6-10 aryl group.

Suitable silanes are known to those in the art and many are available commercially. Preferred silanes include tetramethoxysilane, tetraethoxysilane, tetrapropoxysilane, tetrabutoxysilane, tetraphenoxysilane, tetrakis(2-ethoxybutoxy)silane, methyltrimethoxysilane, dimethyldiethoxysilane, trimethylethoxysilane, diphenyldiethoxysilane. Most preferred is tetraethoxysilane (Dynasilan A).

Appropriate levels of silane stabiliser in the composition as a whole are 0.05 to 5 wt%, such as 0.1 to 5 wt%, preferably 0.2 to 3 wt%, most preferably 0.5 to 3 wt%, preferably 0.4 to 1.5 wt%. Where a mixture of silanes are present, these levels relate to the combined amounts of silanes.

### Carbodiimide

A carbodiimide compound is one containing a functional group represented by the formula [-N=C=N-] in the molecule. The carbodiimide stabiliser compound of the invention preferably contains an optionally substituted alkyl, optionally substituted cycloalkyl or optionally substituted aryl group in the carbodiimide backbone, preferably an optionally substituted aryl group, especially a substituted aryl group in the backbone of the molecule.

The term alkyl used above refers either to linear or branched alkyl group. The alkyl or cycloalkyl group preferably contains a minimum of 5 carbon atoms. A cycloalkyl group preferably contains a 5 to 10 membered ring which may be monocyclic or fused to a second ring, e.g. in decalin. If the alkyl or cycloalkyl is substituted then said substituents may be selected from one or more of a halogen, alkyl group having 1 to 8 carbon atoms or a C₃₋₈-cycloalkyl group.

In a particularly preferred embodiment the carbodiimide of the invention has general formula (III): 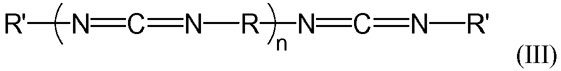 wherein
R is an optionally substituted arylene group, optionally substituted cycloalkylene or an optionally substituted alkylene group;
each R' is independently identical or different and is optionally substituted aryl, optionally substituted cycloalkyl or optionally substituted alkyl group, and
n is an integer from 0 to 500, preferably from 0 to 50.
R and R' may be the same or different.

In a preferred embodiment, the carbodiimide of the invention is a monocarbodiimide (monomeric carbodiimide). The compounds concerned have the formula (IV) where n=0, i.e.

R'-N=C=N- R' (IV)

wherein R' is independently an optionally substituted aryl group, optionally substituted alkyl group or optionally substituted cycloalkyl group, especially an optionally substituted aryl group. Preferably R' is an optionally substituted C₆₋₁₀aryl, such as C₆₋₁₀aryl substituted with one or more of a halogen, alkyl group having 1 to 8 carbon atoms or a C₃₋₈-cycloalkyl group. Branched alkyl or cycloalkyl radicals having 3 or more carbon atoms, e.g. 3 to 8 carbon atoms such as isopropyl groups, are especially preferred substituents. It is preferred if the carbodiimide has a relatively low Mw such as less than 400 g/mol. Both R' groups are preferably the same.

A particularly suitable and preferred carbodiimide is 1,3-di-ortho-tolylcarbodiimide.

Alternatively, the carbodiimide may be polymeric. The compounds concerned have the formula (III) where n ≥ 1. There may be 2 to 500, preferably from 2 to 50, repeating units in the molecule.

In a further alternative embodiment, the carbodiimide is polymeric and comprises repeating unit of formula (V):

-(-N=C=N-R)ₙ- (V)

wherein R is an optionally substituted arylene group; and
n is ≥ 2.

There may be 2 to 500, preferably from 2 to 50, repeating units in the molecule.

It is preferred if the carbodiimides of the invention are substituted aryls. It is more preferred if both R' groups are substituted or all R groups are substituted. It is even more preferred if each R or R' group carries two or more substituents.

Aryl or arylene groups R and R' are preferably phenyl or naphthyl, especially phenyl (or phenylene obviously). Examples of the substituents on said aryl or arylene groups include at least one substituent selected from halogens, alkyl groups having 1 to 8 carbon atoms and C₃₋₈-cycloalkyl groups. Branched alkyl or cycloalkyl radicals having 3 or more carbon atoms, e.g. 3 to 8 carbon atoms are especially preferred, such as isopropyl groups. The term branched substituent is used herein to refer to branched alkyl groups or any C3-8 cycloalkyl group which we regard as inherently non-linear and hence branched.

There may be 1 to 6 such substituents, preferably 1 to 3 such substituents, most especially 1 to 4 or 1 to 3 such groups. Particularly preferred substituted aryl or arylene groups for R and R' include methylphenyl(ene), or phenyl(ene) substituted with two or more C₁₋₆alkyl groups.

Substituents are preferably not on adjacent carbon atoms. Patterns of interest include 1,3-, 2,6- or 1,3,5-substitution.

In one embodiment, it is preferred if substituents are *ortho* to the carbodiimide functionality. One *ortho* position may be substituted, preferably both *ortho* positions are substituted.

In all embodiments, it is preferred if all the [-N=C=N-] functional groups are attached directly to the aryl or arylene rings of the R or R' groups.

In the context of the substituents present, the term "alkyl" is intended to cover both linear or branched alkyl groups. Preferred alkyl groups have 1 to 8 carbon atoms such as methyl, ethyl, propyl, isopropyl and butyl. Cycloalkyl groups are preferably C₃₋₈-cycloalkyl groups such as cyclopentyl or cyclohexyl.

It is preferred if both R' groups in the molecule are the same. Molecules are preferably symmetrical. The most preferred substituents are C1-6 alkyl groups, e.g. methyl or isopropyl.

Examples of a monocarbodiimide compounds include: 1,3-di-o-methylphenylcarbodiimide, 1,3-di-p-methylphenylcarbodiimide, 1,3-diphenylcarbodiimide and bis(2,6-diisopropylphenyl)carbodiimide.

Examples of commercially available monocarbodiimides which may be used in the present invention are Additin RC 8500, Stabaxol I and Stabaxol I LF from Rhein Chemie Rheinau GmbH and Stabilisator 3000, Stabilisator 7000 and Stabilisator 7000 F from Rasching GmbH.

In an alternative embodiment of the present invention utilizes a polymeric carbodiimide [i.e. having n ≥ 2 in formula (i)]. Again, these carbodiimides preferably contain an aryl ring.

Examples of polymeric carbodiimide compounds include tetramethylxylenecarbodiimide (degree of polymerization=2 to 20), N,N-dimethylphenylcarbodiimide (degree of polymerization=2 to 20), N,N'-di-2,6-diisopropylphenylenecarbodiimide (degree of polymerization=2 to 20) and 1,3,5-triisopropylphenylene-2,4-carbodiimide (degree of polymerisation = 2 to 20).

Examples of commercially available polymeric carbodiimides which can be used for the present invention are Stabaxol P, Stabaxol P100, Stabaxol P200 and Stabaxol P400 from Rhein Chemie Rheinau GmbH and Stabilisator 2000 and Stabilisator 9000 from Rasching GmbH.

Alternatively, a mixture of two or more carbodiimides of any of the types listed may be employed. When a mixture of carbodiimides is used, the carbodiimides used may be selected from the group consisting of monomeric or polymeric carbodiimides.

The carbodiimide compounds may be used in amounts of between 0.05 to 5.0 wt%, such as 0.5 to 3.0 wt%, preferably 1.0 to 2.0 wt in the composition as a whole are. Where a mixture of carbodiimides are present, these levels relate to the combined amounts of carbodiimides.

### Composition

In addition to the silyl ester copolymer, rosin, tralopyril and stabilizer, the antifouling coating composition according to the present invention may optionally further comprise one or more components selected among other binders, inorganic or organic pigments, extenders and fillers, additives, solvents and thinners.

Examples of pigments are inorganic pigments such as titanium dioxide, iron oxides, zinc oxide and zinc phosphate; organic pigments such as phthalocyanine compounds, azo pigments and carbon black.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, wetting and dispersing agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

Examples of dehydrating agents and drying agents include orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert*-butyl borate; silicates such as trimethoxymethyl silane, tetraethyl silicate and ethyl polysilicate; and isocyanates, such as p-toluenesulfonyl isocyanate.

In general, any of these optional components can be present in an amount ranging from 0.1 to 50 wt%, typically 0.5 to 20 wt%, preferably 0.75 to 15 wt% of the antifouling composition. It will be appreciated that the amount of these optional components will vary depending on the end use.

It is highly preferred if the antifouling composition contains a solvent. This solvent is preferably volatile and is preferably organic. Examples of organic solvents and thinners are aromatic hydrocarbons such as xylene, toluene, mesitylene; ketones methyl ethyl ketone, methyl isobutyl ketone, methyl isoamyl ketone, methyl amyl ketone, diisobutyl ketone, methyl propyl ketone, cyclopentanone, cyclohexanone; esters such as butyl acetate, *tert*-butyl acetate, amyl acetate, isoamyl acetate, ethylene glycol methyl ether acetate, propyl propyonate, butyl propyonate,; ethers such as ethylene glycol dimethyl ether, diethylene glycol dimethyl ether, dibutyl ether, dioxane, tetrahydrofuran, alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons. Solvesso™ sold by ExxonMobil is another suitable solvent.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention should preferably have solids content above 40 vol%, e.g. above 45 % by volume, such as above 50 vol%, preferably above 55 vol%.

More preferably the antifouling coating composition should have a content of volatile organic compounds (VOC) below 500 g/L, preferably below 400 g/L, e.g. below 390 g/L. VOC content can be calculated (ASTM D5201-01) or measured, preferably measured.

Thus, viewed from another aspect the invention provides a marine antifouling coating composition comprising:
(ii) 0.5 to 45 wt% of a silyl ester copolymer
(ii) 0.5 to 45 wt% of a rosin or derivative thereof;
(iii) 0.5 to 10 wt% of tralopyril or a salt thereof; and
(iv) 0.05 to 5.0 wt% a stabilizer selected from at least one of a carbodiimide or a silane formula (I):

   SiRₙ(OR)₄₋ₙ (I)

   in which n = 0, 1, 2 or 3, and each R is independently a C1-20 hydrocarbyl group in which each R is optionally interrupted by an O group.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples.

### Materials and methods

Econea™ available from Janssen, common name tralopyril.

Dynasilan A is a tetraethyl ester of ortho silicic acid, frequently referred to as tetraethoxysilane (Wacker Chemie).

Sylosive A4 molecular sieve powder is a micronized highly porous crystalline aluminosilicate, from Grace Davison.

### Accelerated storage stability testing

Each coating composition was filled in 250 ml paint can and sealed off. The cans were stored at 52°C. At intervals the cans were taken out and the viscosity of the coating composition were measured according to ISO 2884-1:2006 using a Cone and Plate viscometer set at 23°C and providing viscosity measurement range of 1-10 P.

### Examples

A test paint formulation was prepared as follows:

**Table 1 (amounts in wt%)**

| | | |
|---|---|---|
| Binders | Silyl ester copolymer (1) (50% in xylene) | 14,9 |
| | Gum Rosin (60% in xylene) | 21,1 |
| | Acrylic polymer (50% in xylene) | 10,0 |
| Biocides | Tralopyril | 3,6 |
| | Zinc pyrithione | 3,1 |
| Fillers, pigments and additives | | 42,9 |
| Solvents | | 4,4 |

| | | |
|---|---|---|
| (1) Commercial triisopropylsilyl methacrylate copolymer by Nitto Kasei Co. Ltd. | | |

In the examples which follow, the amount of biocide, fillers, pigments, additives and solvent remains the same. Also the amount of binder remains the same but the amount of each binder component relative to other binder components changes as explained in each example. The same silyl ester copolymer (1), gum rosin and acrylic polymer are used in each example. Example 1 contains the ratio described in table 1.

Table 2 shows the high-shear viscosity development upon storage at 52 °C.

### Example 1

Copper free paint formulations (based on table 1) with binder vol. ratio 30 % silyl/20 % acrylic/50 % Rosin (as in table 1)

**Table 2**

| | Ex.1a | Ex.1b | C1a | C1b | C1c |
|---|---|---|---|---|---|
| Stabiliser | A | A + B | none | C | D |
| Amount of stabiliser [wt%] | 1 | 1+1 | - | 1 | 1 |
| Amount of paint [wt%] | 99 | 98 | 100 | 99 | 99 |
| Initial viscosity [cP] | 190 | 150 | 300 | 480 | 200 |
| Increase in viscosity [%] | | | | | |
| 2 weeks | 0 | 25 | 7 | 18 | 242 |
| 4 weeks | 20 | 33 | 56 | 62 | 361 |
| 6 weeks | 33 | 27 | 98 | 99 | 383 |
| 8 weeks | 94 | 56 | 156 | gel | gel |

| | | | | | |
|---|---|---|---|---|---|
| Stabilizer A = tetraethoxysilane Stabilizer B = 1,3-di-o-tolyl carbodiimide Stabilizer C = CaSO₄ anh. Stabiliser D = Sylosive A4 | | | | | |

In the absence of a stabilizer the viscosity of the paint increases dramatically within 8 weeks. Adding CaSO₄ contributes to a slightly higher percentage increase in viscosity as compared to formulation without stabilizer. Adding Sylosive A4 led to a dramatic increase in viscosity.

In the presence of a tetraethoxysilane, a much reduced increase in viscosity was observed after 6 weeks. The formulation containing both a tetraethoxysilane and a carbodiimide had a still lower increase in viscosity after 8 weeks.

Tables 3 to 4 illustrate that the inclusion of 1 wt% carbodiimide or 1 wt% tetraethoxysilane has a similar effect in two different binder systems. The amount of tralopyril remains the same (3.6 wt% in all examples).

### Example 2

Copper free paint formulations with binder relative vol. ratio 40 % silyl/20 % acrylic /40 % Rosin (and tralopyril, additives, solvents etc as in table 1).

### Example 3

Copper free paint formulations with binder relative vol. ratio 70 % silyl /30 % Rosin (and tralopyril, pigments, additives etc as in table 1).

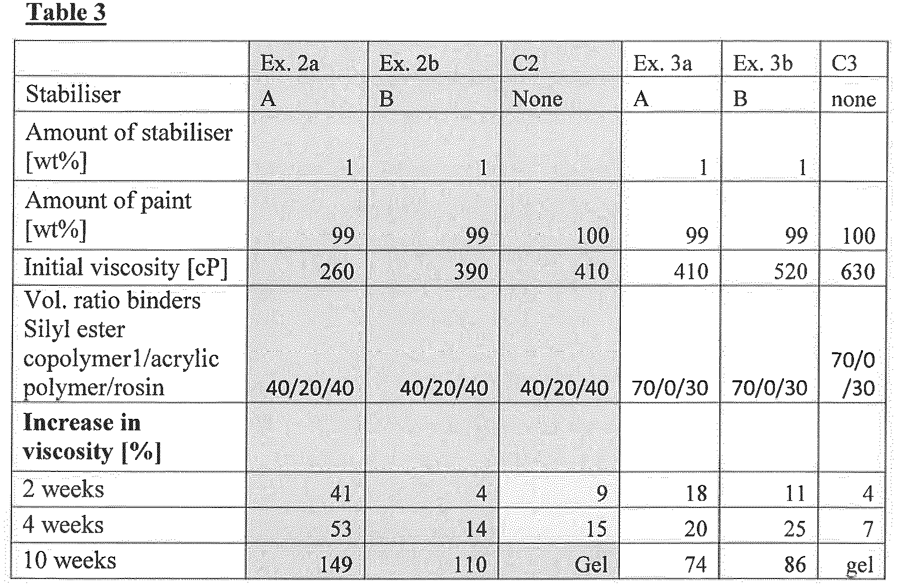

### Example 4

Copper free paint formulations with binder relative vol. ratio 80 % silyl /20 % Rosin (and tralopyril, pigments, additives etc as in table 1).

### Example 5

Copper free paint formulations with binder relative vol. ratio 10 % silyl /30% silyl (2)/10 % Rosin/50% acrylic (and tralopyril, pigments, additives etc as in table 1).

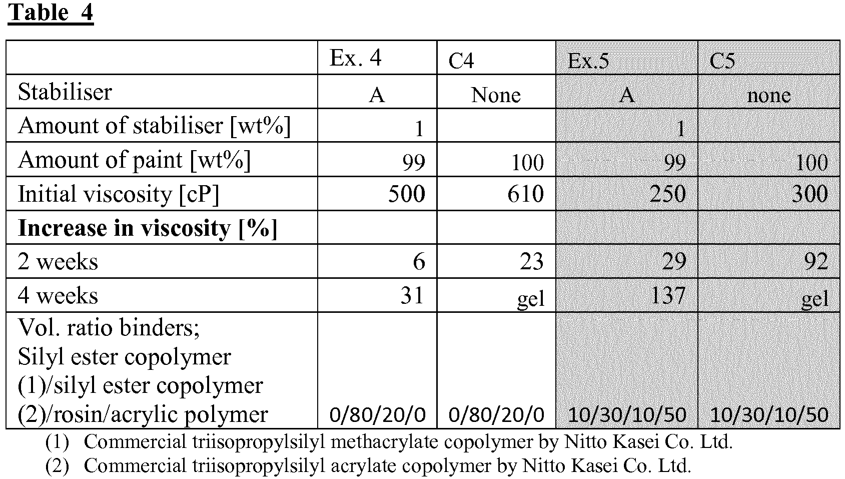

### Example 6

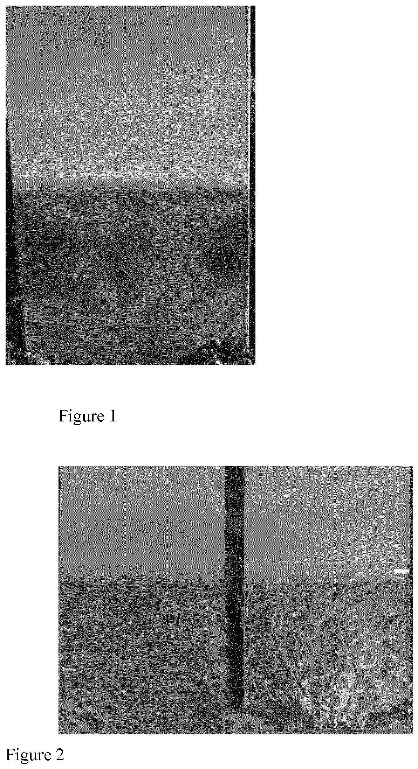

We assessed colour darkening of a paint of the invention vs a commercial copper oxide containing paint. Results are depicted in figures 1 and 2 and the effect is clearly seen in the colour figures filed.

Identical steel panels with primer were coated with a commercial copper oxide containing paint or a paint of Example 1a which is copper free. The panels were partially immersed in the sea in a bay in Sandefjord Norway for the same period.

In Figure 1, a leading copper oxide based marine antifouling paint is used. Clear darkening of the red panel is seen above the water line. In fact, the panel almost appears blue in colour in the figures.

The paint of example 1a was tested under the same conditions. The bright red colour of the panel above the water line is clearly maintained in figure 2.

## Claims

1. A marine antifouling coating composition comprising:
(A) a binder comprising a silyl ester copolymer and a rosin or a derivative thereof;
(B) tralopyril or a salt thereof; and
(C) a stabilizer selected from at least one of a carbodiimide or a silane formula (I):
SiRₙ(OR)₄₋ₙ (I)
in which n = 0, 1, 2 or 3, and each R is independently a C1-20 hydrocarbyl group in which each R is optionally interrupted by an O group;
wherein the marine antifouling coating composition contains less than 0.2 wt% (dry solids) cuprous oxide.

2. A marine antifouling coating composition as claimed in claim 1 wherein the rosin or derivative thereof is present in an amount of at least 0,5 wt% (dry solids) of the antifouling coating composition, preferably the rosin or derivative thereof is present in an amount of 1 to 45 wt% (dry solids), preferably 1 to 20 wt%, such as 10 to 15wt%.

3. A marine antifouling coating composition as claimed in any preceding claim wherein the antifouling coating composition contains less than 0.2 wt% (dry solids) copper compounds.

4. An antifouling coating composition as claimed in any preceding claim, wherein said silyl ester copolymer comprises at least one monomer (A) of formula (II): 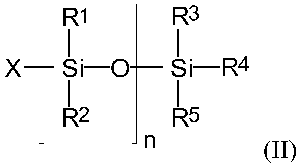 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, C₆₋₂₀ aryl groups and -OSi(R⁶)₃ groups;
each R⁶ is a linear or branched C₁₋₄ alkyl group,
n is an integer from 0 to 5;
X is an ethylenically unsaturated group, preferably an acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group.

5. An antifouling coating composition according to claim 4 wherein the silyl ester monomers are compounds of formula (II) in which n=0.

6. An antifouling coating composition according to any preceding claim wherein the silyl ester copolymer is present in an amount of 0,5 to 45 wt% (dry solids), preferably 1 to 30 wt% of the composition.

7. An antifouling coating composition according to any preceding claim comprising tralopyril in an amount of 0.5 to 10 wt%, preferably 1 to 7 wt%, 2 to 6 wt%.

8. An antifouling coating composition according to any preceding claim wherein the stabilizer comprises a carbodiimide of formula (III): 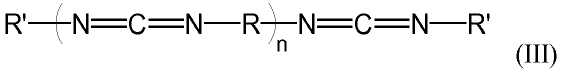 wherein
R is an optionally substituted arylene, optionally substituted alkylene or optionally substituted cycloalkylene group;
each R' is independently identical or different and is an optionally substituted aryl, optionally substituted alkyl, or optionally substituted cycloalkyl group, and
n is an integer from 0 to 500, preferably from 0 to 50.

9. An antifouling coating composition according to claim 8 wherein R is a substituted C₆₋₁₀ arylene, substituted with one or more of a halogen, an alkyl group having 1 to 8 carbon atoms or a C₃₋₈-cycloalkyl group.

10. An antifouling coating composition according to any preceding claim, wherein the carbodiimide is present in an amount of 0.05 to 5 wt% , preferably 0.5 to 3 wt%, most preferably 1 to 2 wt% of the composition.

11. An antifouling composition according to any preceding claim wherein the stabilizer comprises a silane of formula (X)
Si(OR)₄ (X)
wherein R is independently a C1-10 alkyl group or a C6-10 aryl group, most preferably the silane is tetraethoxysilane or tetramethoxysilane.

12. An antifouling composition according to any preceding claim wherein the silane is present in an amount of 0.05 to 5 wt% preferably 0.5 to 3 wt%, most preferably 1 to 2 wt%.

13. A marine antifouling coating composition according to claim 1 comprising:
(i) 0.5 to 45 wt% of a silyl ester copolymer
(ii) 0.5 to 45 wt% of a rosin or derivative thereof;
(iii) 0.5 to 10 wt% of tralopyril or a salt thereof; and
(iv) 0.1 to 5.0 wt% a stabilizer selected from at least one of a carbodiimide or a silane formula (I):
SiRₙ(OR)₄₋ₙ (I)
in which n = 0, 1, 2 or 3, and each R is independently a C1-20 hydrocarbyl group in which each R is optionally interrupted by an O group.

14. A process for protecting an object from fouling comprising coating at least a part of said object which is subject to fouling with an anti-fouling coating composition as claimed in any preceding claim.

15. An object coated with the antifouling coating composition as claimed in any of claims 1 to 13.

## Patentansprüche

1. Antifoulingbeschichtungszusammensetzung für Schiffe, umfassend:
(A) ein Bindemittel, das ein Silylestercopolymer und ein Harz oder ein Derivat davon umfasst;
(B) Tralopyril oder ein Salz davon; und
(C) einen Stabilisator, ausgewählt aus zumindest einem von einem Carbodiimid oder einem Silan der Formel (I):
SiRₙ(OR)₄₋ₙ (I),
wobei n = 0, 1, 2 oder 3 ist und jeder Rest R unabhängig eine Cl-20-Kohlenwasserstoffgruppe ist, in der jeder Rest R gegebenenfalls durch eine O-Gruppe unterbrochen ist;
wobei die Antifoulingbeschichtungszusammensetzung für Schiffe weniger als 0,2 Gew.-% (Trockensubstanz) Kupfer(I)-oxid enthält.

2. Antifoulingbeschichtungszusammensetzung für Schiffe nach Anspruch 1, wobei das Harz oder das Derivat davon in einer Menge von zumindest 0,5 Gew.-% (Trockensubstanz) der Antifoulingbeschichtungszusammensetzung, das Harz oder das Derivat davon vorzugsweise in einer Menge von zumindest 1 bis 45 Gew.-% (Trockensubstanz), vorzugsweise 1 bis 20 Gew.-%, wie z.B. 10 bis 15 Gew.-%, vorliegt.

3. Antifoulingbeschichtungszusammensetzung für Schiffe nach einem der vorstehenden Ansprüche, wobei die Antifoulingbeschichtungszusammensetzung weniger als 0,2 Gew.-% (Trockensubstanz) Kupferverbindungen enthält.

4. Antifoulingbeschichtungszusammensetzung nach einem der vorstehenden Ansprüche, wobei das Silylestercopolymer zumindest ein Monomer (A) der Formel (II) umfasst: 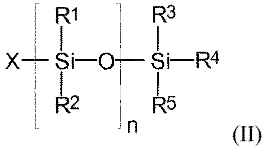 wobei
R¹ und R² jeweils unabhängig aus linearen oder verzweigten C₁₋₄-Alkylgruppen ausgewählt sind;
R³, R⁴ und R⁵ jeweils unabhängig aus der Gruppe ausgewählt ist, bestehend aus linearen oder verzweigten C₁₋₂₀-Alkylgruppen, C₃₋₁₂-Cycloalkylgruppen, C₆₋₂₀-Arylgruppen und -OSi(R⁶)₃-Gruppen;
jeder Rest R⁶ eine lineare oder verzweigte C₁₋₄-Alkylgruppe ist,
n eine ganze Zahl von 0 bis 5 ist;
X eine ethylenungesättigte Gruppe ist, vorzugsweise eine Acryloyloxygruppe, eine Methacryloyloxygruppe, eine (Methacryloyloxy)alkylcarboxygruppe, eine (Acryloyloxy)alkylcarboxygruppe, eine Maleinoyloxygruppe, eine Fumaroyloxygruppe, eine Itaconoyloxygruppe oder eine Citraconoyloxygruppe.

5. Antifoulingbeschichtungszusammensetzung nach Anspruch 4, wobei die Silylestermonomere Verbindungen der Formel (II) sind, wobei n = 0 ist.

6. Antifoulingbeschichtungszusammensetzung nach einem der vorstehenden Ansprüche, wobei das Silylestercopolymer in einer Menge von 0,5 bis 45 Gew.-% (Trockensubstanz), vorzugsweise 1 bis 30 Gew.-%, der Zusammensetzung vorliegt.

7. Antifoulingbeschichtungszusammensetzung nach einem der vorstehenden Ansprüche, umfassend Tralopyril in einer Menge von 0,5 bis 10 Gew.-%, vorzugsweise 1 bis 7 Gew.-%, 2 bis 6 Gew.-%.

8. Antifoulingbeschichtungszusammensetzung nach einem der vorstehenden Ansprüche, wobei der Stabilisator ein Carbodiimid der Formel (III) umfasst: 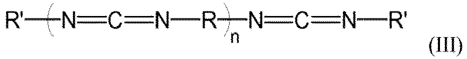 wobei
R eine gegebenenfalls substituierte Arylen-, eine gegebenenfalls substituierte Alkylen- oder eine gegebenenfalls substituierte Cycloalkylengruppe ist;
jeder Rest R' jeweils unabhängig gleich oder verschieden ist und eine gegebenenfalls substituierte Aryl-, eine gegebenenfalls substituierte Alkyl- oder eine gegebenenfalls substituierte Cycloalkylgruppe ist und
n eine ganze Zahl von 0 bis 500, vorzugsweise von 0 bis 50, ist.

9. Antifoulingbeschichtungszusammensetzung nach Anspruch 8, wobei R ein substituiertes C₆₋₁₀-Arylen ist, das mit einem oder mehreren von einem Halogen, einer Alkylgruppe, die 1 bis 8 Kohlenstoffatome aufweist, oder einer C₃₋₈-Cycloalkylgruppe substituiert ist.

10. Antifoulingbeschichtungszusammensetzung nach einem der vorstehenden Ansprüche, wobei das Carbodiimid in einer Menge von 0,05 bis 5 Gew.-%, vorzugsweise 0,5 bis 3 Gew.-%, besonders bevorzugt 1 bis 2 Gew.-%, der Zusammensetzung vorliegt.

11. Antifoulingzusammensetzung nach einem der vorstehenden Ansprüche, wobei der Stabilisator ein Silan der Formel (X) umfasst:
Si(OR)₄ (X),
wobei R unabhängig eine C1-10-Alkylgruppe oder eine C6-10-Arylgruppe ist, das Silan besonders bevorzugt Tetraethoxysilan oder Tetramethoxysilan ist.

12. Antifoulingzusammensetzung nach einem der vorstehenden Ansprüche, wobei das Silan in einer Menge von 0,05 bis 5 Gew.-%, vorzugsweise 0,5 bis 3 Gew.-%, besonders bevorzugt 1 bis 2 Gew.-% vorliegt.

13. Antifoulingbeschichtungszusammensetzung für Schiffe nach Anspruch 1, umfassend:
(i) 0,5 bis 45 Gew.-% eines Silylestercopolymers,
(ii) 0,5 bis 45 Gew.-% eines Harzes oder eines Derivats davon;
(iii) 0,5 bis 10 Gew.-% Tralopyril oder eines Salzes davon; und
(iv) 0,1 bis 5,0 Gew.-% eines Stabilisators, ausgewählt aus zumindest einem von einem Carbodiimid oder einem Silan der Formel (I):
SiRₙ(OR)₄₋ₙ (I),
wobei n = 0, 1, 2 oder 3 ist und jeder Rest R unabhängig eine C₁₋₂₀-Kohlenwasserstoffgruppe ist, in der jeder Rest R gegebenenfalls durch eine O-Gruppe unterbrochen ist.

14. Verfahren zum Schützen eines Gegenstands vor Fäulnis, umfassend das Beschichten zumindest eines Teils des Gegenstands, der von Fäulnis betroffen ist, mit einer Antifoulingbeschichtungszusammensetzung nach einem der vorstehenden Ansprüche.

15. Gegenstand, beschichtet mit der Antifoulingbeschichtungszusammensetzung nach einem der Ansprüche 1 bis 13.

## Revendications

1. Composition de revêtement marine antisalissure comprenant :
A) un liant comprenant un copolymère d'ester de silyle et une résine de colophane ou un dérivé de celle-ci ;
(B) du tralopyril ou un sel de celui-ci ; et
(C) un stabilisant sélectionné parmi au moins l'un d'un carbodiimide ou d'un silane de formule (I) :
SiRₙ(OR)₄₋ₙ (I)
dans laquelle n = 0, 1, 2 ou 3, et chaque R est indépendamment un groupe hydrocarbyle en C₁₋₂₀ dans lequel chaque R est facultativement interrompu par un groupe O;
dans laquelle la composition de revêtement marine antisalissure contient moins de 0,2 % en poids (solides secs) d'oxyde cuivreux.

2. Composition de revêtement marine antisalissure selon la revendication 1, dans laquelle la résine de colophane ou son dérivé est présent(e) en une quantité d'au moins 0,5 % en poids (solides secs) de la composition de revêtement antisalissure, de préférence la résine de colophane ou son dérivé est présent(e) en une quantité de 1 à 45 % en poids (solides secs), de préférence de 1 à 20 % en poids, par exemple de 10 à 15 % en poids.

3. Composition de revêtement marine antisalissure selon l'une quelconque des revendications précédentes, dans laquelle la composition de revêtement antisalissure contient moins de 0,2 % en poids (solides secs) de composés de cuivre.

4. Composition de revêtement antisalissure selon l'une quelconque des revendications précédentes, dans laquelle ledit copolymère d'ester de silyle comprend au moins un monomère (A) de formule (II) : 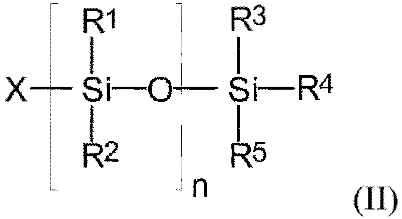 dans laquelle
R¹ et R² sont chacun indépendamment sélectionnés parmi des groupes alkyle en C₁₋₄ linéaires ou ramifiés;
R³, R⁴ et R⁵ sont chacun indépendamment sélectionnés dans le groupe constitué de groupes alkyle en C₁₋₂₀ linéaires ou ramifiés, de groupes cycloalkyle en C₃₋₁₂, de groupes aryle en C₆₋₂₀ et de groupes -OSi(R⁶)₃ ;
chaque R⁶ est un groupe alkyle en C₁₋₄ linéaire ou ramifié,
n est un nombre entier de 0 à 5 ;
X est un groupe éthyléniquement insaturé, de préférence un groupe acryloyloxy, un groupe méthacryloyloxy, un groupe (méthacryloyloxy)alkylcarboxy, un groupe (acryloyloxy)alkylcarboxy, un groupe maléinoyloxy, un groupe fumaroyloxy, un groupe itaconoyloxy ou un groupe citraconoyloxy.

5. Composition de revêtement antisalissure selon la revendication 4, dans laquelle les monomères d'ester de silyle sont des composés de formule (II) dans lesquels n =0.

6. Composition de revêtement antisalissure selon l'une quelconque des revendications précédentes, dans laquelle le copolymère d'ester de silyle est présent en une quantité de 0,5 à 45 % en poids (solides secs), de préférence de 1 à 30% en poids de la composition.

7. Composition de revêtement antisalissure selon l'une quelconque des revendications précédentes, comprenant du tralopyril en une quantité de 0,5 à 10% en poids, de préférence de 1 à 7 % en poids, de 2 à 6 % en poids.

8. Composition de revêtement antisalissure selon l'une quelconque des revendications précédentes, dans laquelle le stabilisant comprend un carbodiimide de formule (III) : 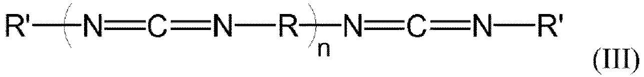 dans laquelle
R est un groupe arylène facultativement substitué, un groupe alkylène facultativement substitué ou un groupe cycloalkylène facultativement substitué;
chaque R' est indépendamment identique ou différent et est un groupe aryle facultativement substitué, un groupe alkyle facultativement substitué, ou un groupe cycloalkyle facultativement substitué, et
n est un nombre entier de 0 à 500, de préférence de 0 à 50.

9. Composition de revêtement antisalissure selon la revendication8, dans laquelle R est un groupe arylène en C₆₋₁₀ substitué, substitué avec un ou plusieurs d'un atome d'halogène, d'un groupe alkyle ayant de 1 à 8 atomes de carbone ou d'un groupe cycloalkyle en C₃₋₈.

10. Composition de revêtement antisalissure selon l'une quelconque des revendications précédentes, dans laquelle le carbodiimide est présent en une quantité de 0,05 à 5 % en poids, de préférence de 0,5 à 3 % en poids, de la manière la plus préférée de 1 à 2 % en poids de la composition.

11. Composition antisalissure selon l'une quelconque des revendications précédentes, dans laquelle le stabilisant comprend un silane de formule (X)
Si(OR)₄ (X)
dans laquelle R est indépendamment un groupe alkyle en C₁₋₁₀ ou un groupe aryle en C₆₋₁₀, de la manière la plus préférée le silane est le tétraéthoxysilane ou le tétraméthoxysilane.

12. Composition antisalissure selon l'une quelconque des revendications précédentes, dans laquelle le silane est présent en une quantité de 0,05 à 5 % en poids, de préférence de 0,5 à 3 % en poids, de la manière la plus préférée de 1 à 2 % en poids.

13. Composition de revêtement marine antisalissure comprenant :
(i) de 0,5 à 45 % en poids d'un copolymère d'ester de silyle
(ii) de 0,5 à 45 % en poids d'une résine de colophane ou d'un dérivé de celle-ci ;
(iii) de 0,5 à 10 % en poids de tralopyril ou d'un sel de celui-ci ; et
(iv) de 0,1 à 5,0% en poids d'un stabilisant sélectionné parmi au moins l'un d'un carbodiimide ou d'un silane de formule (I) :
SiRₙ(OR)₄₋ₙ (I)
dans laquelle n = 0, 1, 2 ou 3, et chaque R est indépendamment un groupe hydrocarbyle en C₁₋₂₀ dans lequel chaque R est facultativement interrompu par un groupe O.

14. Procédé de protection d'un objet contre des salissures comprenant le revêtement d'au moins une partie dudit objet qui est sujet aux salissures avec une composition de revêtement antisalissure selon l'une quelconque des revendications précédentes.

15. Objet revêtu avec la composition de revêtement antisalissure selon l'une quelconque des revendications 1 à 13.
